# EUROPÄISCHE PATENTSCHRIFT

(11) **EP 2 947 969 B1**
(45) Veröffentlichungstag und Bekanntmachung des Hinweises auf die Patenterteilung: **26.12.2018**
(21) Anmeldenummer: 15164447.3
(22) Anmeldetag: 21.04.2015
(51) Int. Cl.: H05B 37/02, H02J 7/00, H02J 7/04, H02J 7/08, H05B 33/08

(54) **NOTLICHT-BETRIEBSGERÄT ZUR VERSORGUNG VON LEUCHTMITTELN**
DISTRESS LIGHT OPERATING APPARATUS FOR SUPPLYING LIGHT SOURCES
APPAREIL DE FONCTIONNEMENT D'ÉCLAIRAGE DE SECOURS DESTINÉ À ALIMENTER DES SOURCES LUMINEUSES

(30) Priorität: 24.04.2014 DE 102014207722
(43) Veröffentlichungstag der Anmeldung: 25.11.2015
(73) Patentinhaber: Tridonic GmbH & Co KG, 6851 Dornbirn (AT)
(72) Erfinder: Ladurner, Simon, 6922 Wolfurt (AT); Kears, John, Witton Gilbert Durham, DH 7 (GB)
(74) Vertreter: Rupp, Christian

(56) Entgegenhaltungen:
- EP-A2- 0 978 923
- EP-A2- 0 981 194
- JP-A- 2009 176 511
- US-A1- 2005 088 100
- US-A1- 2009 160 406
- US-A1- 2011 236 751

## Beschreibung

Die vorliegende Erfindung bezieht sich auf ein Beleuchtungssystem, insbesondere auf ein Notlicht-Betriebsgerät, mit einer Steuerschaltung, die den Ladezustand sowie das Entladen und Laden eines Ladungsspeichers bzw. elektrischer Energiespeichermittel, beispielsweise einer Batterie und/oder eines Akkumulators, überwachen und steuern kann. Allgemeiner bezieht sich die Erfindung auf ein busfähiges Beleuchtungssystem, das eine solche Steuerschaltung zur Überwachung und/oder Steuerung eines Ladezustands aufweist, sowie auf ein Verfahren zum Betrieb eines solchen Systems, vorzugsweise zur Optimierung einer Kapazität des Ladungsspeichers bzw. der elektrischen Energiespeichermittel.

Insbesondere bei Notlicht-Betriebsgeräten ist es vorgesehen, dass bei der erstmaligen Inbetriebnahme, d.h. jedoch bspw. auch nach einem Wechsel des Ladungsspeichers, ein Inbetriebnahmetest erfolgt. Dabei wird das wenigstens eine Leuchtmittel/Notlicht-Leuchtmittel, beispielsweise nach Installation des Systems in einem Gebäude, eingeschaltet, um zu prüfen, ob eine vorgeschriebene Leuchtdauer erreicht wird, wenn das Leuchtmittel ausgehend von dem Ladungsspeicher gespeist wird.

Es sind Systeme bekannt, die einerseits eine normale Beleuchtung und andererseits eine Notlichtbeleuchtung zur Verfügung stellen. Bei Geräten, die eine Notlichtbeleuchtung bereitstellen, ist folglich der Zustand des Ladungsspeichers wichtig für die durch das Gerät gewährte Sicherheit.

Die Druckschrift EP 0 981 194 A2 offenbart ein Verfahren und eine Einrichtung zum Laden einer Sekundärbatterie.

Die Druckschrift US 2011/236751 A1 offenbart Hochspannungsbatterieformationsprotokolle und eine Steuerung des Ladens und Entladens zur wünschenswerten Langzeitzyklisierung-Performance.

Die Druckschrift US 2009/160406 A1 offenbart ein Ladeverfahren und ein System, das dieses verwendet.

Die Druckschrift EP 0 978 923 A2 offenbart ein elektrisches Werkzeugladesystem, welches Batterierekonditionierung und Batteriekapazitätsdaten Updatefunktionen verwendet.

Die Druckschrift JP 2009 176 511 A offenbart ein Lade/Entladeverfahren für Lithiumionen-Sekundärbatterien.

Die Druckschrift JP 1980 055636 offenbart ein Ladeüberwachungssystem in einem Mobilkommunikationssystem.

Die Druckschrift US 2005/088100 A1 offenbart ein Notbeleuchtungsgerät mit einem automatischen Lade/Entlade- und Überwachungs system.

Die Leuchtdauer in einem Notlichtbetrieb, d.h. dann, wenn die Versorgung der Leuchtmittel ausgehend von dem Ladungsspeicher/den elektrischen Energiespeichermitteln erfolgt, kann beispielsweise zwischen 1 und 5 Stunden betragen, wobei auch andere Zeiträume, z.B. 3 oder mehr als 5 Stunden gewählt werden können.

Dabei kann vorgesehen sein, dass das Beleuchtungssystem das Einhalten der entsprechenden Vorschriften selbst prüft und durch ein Bussignal oder optische und/oder akustische Anzeige das Ergebnis eines solchen Tests signalisiert. Hierzu kann das Beleuchtungssystem zusätzliche Signalisierungsmittel wie LEDs oder Sender zur Aussendung von Statusinformationen über eine drahtgebundene oder auch drahtlose Schnittstelle (IR, Funk, Zweidrahtbus, etc.) aufweisen. Zur Signalisierung können jedoch auch die von dem Beleuchtungssystem angesteuerten bzw. betriebenen Leuchtmittel selbst verwendet werden.

Eine Notbeleuchtung ist bzw. die Notlicht-Leuchtmittel sind dabei vorzugsweise dann aktiviert, wenn die normale Beleuchtung nicht länger in Betrieb ist, weil eine von der Netzversorgung ausgehende Versorgung für die normale Beleuchtung nicht länger zur Verfügung steht oder fehlerhaft ist.

Die Notlicht-Leuchtmittel werden dann typischerweise durch eine Batterie und/oder einen Akkumulator versorgt. Vorliegend werden die Begriffe Batterie, Ladungsspeicher, Energiespeicher, elektrische Energiespeichermittel und Akkumulator synonym verwendet. Eine Batterie umfasst hier insbesondere eine Vorrichtung, die eine elektrische Zelle aufweist, d.h. eine Vorrichtung, die insbesondere Elektrizität aus einer chemischen Reaktion heraus erzeugt.

Dabei ist selbstverständlich zu verstehen, dass eine Batterie auch zwei oder mehr elektrische Zellen aufweisen kann, die vorzugsweise in Serie oder parallel verschaltet sind. Eine elektrische Zelle besteht dabei vorzugsweise aus einer negativen Elektrode, einem Elektrolyt, das Ionen leitet, einem Separator, der ebenfalls ein Ionenleiter ist, und einer positiven Elektrode. Eine Batterie kann insbesondere wiederaufladbar sein.

Die normale Beleuchtung wird z.B. durch einen Ein-/AusSchalter gesteuert, durch den der Benutzer (über ein Steuersystem des Beleuchtungssystems) bestimmen kann, ob die normale Beleuchtung aktiviert oder deaktiviert ist.

Die Notlichtbeleuchtung durch die Notlicht-Leuchtmittel wird hingegen vorzugsweise automatisch aktiviert, wenn die elektrische Versorgung ausfällt oder fehlerhaft ist und wenn dies durch die Steuerschaltung bei der Überwachung der elektrischen Versorgung erkannt wird.

Die Teile eines Beleuchtungssystems, die zur Beleuchtung in einer Notlichtsituation dienen, können dabei Teile des Systems nutzen, die auch zur normalen Beleuchtung verwendet werden. Beispielsweise kann ein gleiches Leuchtmittel, z.B. eine Gasentladungslampe oder eine LED, und/oder das gleiche Vorschaltgerät sowohl für den Notlichtbetrieb als auch für den normalen Betrieb verwendet werden. Auch andere Komponenten können gemeinsam verwendet werden.

In einem Beleuchtungssystem, das sowohl Notlicht-Leuchtmittel zur Notlichtbeleuchtung als auch Leuchtmittel zur normalen Beleuchtung aufweist, werden also zwei verschiedene Betriebsmodi vereint. In dem, 'normalen' Modus, d.h. wenn die elektrische Versorgung des Beleuchtungssystems normal, insbesondere in einem normalen Spannungsbereich, erfolgt wird ein Ein- und Ausschalten eines Schalters überwacht und das Leuchtmittel des Beleuchtungssystems wird abhängig von dem Zustand des Schalters ein- oder ausgeschaltet.

In einem Notlichtmodus, d.h. wenn eine elektrische Versorgung nicht oder nur fehlerhaft bereitgestellt ist, d.h. insbesondere außerhalb der normalen Spannungsbereiche liegt, wird entweder das gleiche Leuchtmittel oder ein anderes Notlicht-Leuchtmittel automatisch eingeschaltet, unabhängig insbesondere von dem Zustand des exemplarisch genannten Schalters. Dann wird auf eine Energieversorgung durch den Ladungsspeicher zurückgegriffen.

Ein Problem besteht nun darin, dass nach der Installation eines Beleuchtungssystems, das einen Notlichtbetriebsmodus bereitstellt, insbesondere des Notlicht-Betriebsgeräts, bzw. nach einem Wechsel des Ladungsspeichers eines solchen Beleuchtungssystems die Kapazität des Ladungsspeichers ihren Nennwert erst erreicht, wenn wenigstens ein Entlade-/Ladezyklus, vorzugsweise zwei Entlade-/Ladezyklen des Ladungsspeichers erfolgt sind.

Es ist daher Ziel der Erfindung, ein Beleuchtungssystem und ein Verfahren zum Betrieb eines solchen Beleuchtungssystems bereitzustellen, das es erlaubt, die Kapazität der Energiespeichermittel, vorzugsweise vor dem Ausführen des Inbetriebnahmetests, zu optimieren. Insbesondere ist es Ziel der Erfindung, eine Verlängerung einer Notlichtbetriebsdauer zu erreichen.

Die Erfindung stellt daher eine Vorrichtung und ein Verfahren gemäß den unabhängigen Ansprüchen bereit. Weiterbildungen der Erfindung sind Gegenstand der abhängigen Ansprüche.

In einem ersten Aspekt wird ein Notlicht-Betriebsgerät zur Versorgung von Leuchtmitteln, insbesondere Notlicht-Leuchtmitteln, bereitgestellt aufweisend einen Anschluss für eine Versorgungsspannung, eine Steuerschaltung, und elektrische Energiespeichermittel, die gesteuert durch die Steuerschaltung ausgehend von der Versorgungsspannung ladbar bzw. über die Leuchtmittel entladbar sind, wobei die Steuerschaltung dazu ausgebildet ist, selbsttätig nach der erstmaligen Inbetriebnahme der Energiespeichermittel wenigstens einen Entlade-/Ladezyklus der Energiespeichermittel durchzuführen, bevor die Steuerschaltung einen Inbetriebnahmetest ansteuert, bei dem die Steuerschaltung durch Betrieb der Leuchtmittel erfasst, ob die Leuchtmittel über einen vorgeschriebenen Zeitraum betreibbar sind.

Die Steuerschaltung kann die Versorgungsspannung des Notlicht-Betriebsgeräts überwachen. Die Steuerschaltung kann ein Laden und Entladen der elektrischen Energiespeichermittel steuern sowie ihren Ladezustand überwachen.

Die elektrischen Energiespeichermittel können das Leuchtmittel, vorzugsweise wenigstens eine LED, in einem Notlichtbetriebsmodus elektrisch versorgen.

Die Steuerschaltung kann ein bestimmtes Ereignis erfassen und abhängig davon wenigstens einmal die elektrischen Energiespeichermittel entladen und/oder laden.

Das bestimmte Ereignis kann eine Zeitdauer sein, während der das Notlicht-Betriebsgerät ausgehend von einer Netzspannung versorgt ist.

Das bestimmte Ereignis kann ein Wechsel der elektrischen Energiespeichermittel sein.

Die Steuerschaltung kann die elektrischen Energiespeichermittel wenigstens einmal auf einen vorbestimmten Schwellenwert, insbesondere vollständig, entladen und wenigstens einmal bis zu einem weiteren Schwellenwert, insbesondere vollständig, laden.

Das Entladen kann bis zu einem Tiefenentladeschutzbereich erfolgen, vorzugsweise bis zu einem Schwellenwert außerhalb, vorzugsweise oberhalb des Tiefenentladeschutzbereiches.

Die Steuerschaltung kann das bestimmte Ereignis nach einer Unterbrechung der elektrischen Versorgung erneut erkennen.

Die Steuerschaltung kann erst nach dem bestimmten Ereignis eine Notlichtbetriebserkennung durchführen.

Die Steuerschaltung kann die elektrischen Energiespeichermittel wenigstens zweimal entladen und laden.

Die Steuerschaltung kann das bestimmte Ereignis automatisch erkennen.

Der kapazitätssteigernde Entlade-/Ladezyklus des Energiespeichermittel kann wiederholt zu späteren Zeitpunkten erfolgen.

Das bestimmte Ereignis kann auch eine Zeitdauer sein, während der das Notlicht-Betriebsgerät ausgehend von einer Netzspannung versorgt ist, beaufschlagt mit einer Zusatzzeitdauer, die durch eine beispielsweise in dem Notlicht-Betriebsgerät generierte (Pseudo-)Zufallszahl vorgegeben wird. Das bestimmte Ereignis kann die Summe aus der Zeitdauer, während der das Notlicht-Betriebsgerät ausgehend von einer Netzspannung versorgt ist, und einer durch eine Zufallszahl vorgegebene Zusatzzeitdauer sein.

Das Notlicht-Betriebsgerät kann eine Busschnittstelle zur Verbindung mit einem digitalen Bus, insbesondere einem DALI-Bus, aufweisen.

In einem weiteren Aspekt wird eine Leuchte mit einem Notlicht-Betriebsgerät bereitgestellt, wie es vorstehend beschrieben ist.

In noch einem weiteren Aspekt wird ein Verfahren zur Steuerung eines Notlicht-Betriebsgeräts zur Versorgung von Leuchtmitteln, insbesondere Notlicht-Leuchtmitteln, bereitgestellt, bei dem elektrische Energiespeichermittel gesteuert durch eine Steuerschaltung ausgehend von einer Versorgungsspannung ladbar bzw. über die Leuchtmittel entladbar sind,
wobei die Steuerschaltung selbsttätig nach der erstmaligen Inbetriebnahme der Energiespeichermittel wenigstens einen Entlade-/Ladezyklus der Energiespeichermittel durchführt, bevor die Steuerschaltung einen Inbetriebnahmetest ansteuert, bei dem die Steuerschaltung durch Betrieb der Leuchtmittel erfasst, ob die Leuchtmittel über einen vorgeschriebenen Zeitraum betreibbar sind.

Die Erfindung wird nunmehr auch mit Bezug auf die Figuren beschrieben. Es zeigt:

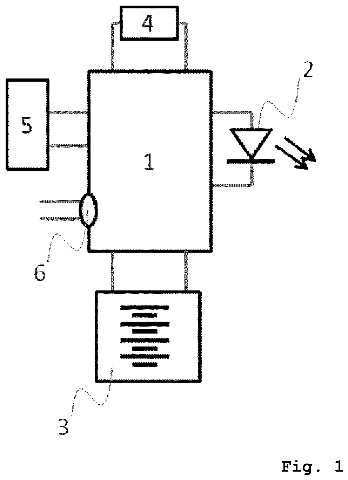

Fig. 1 eine schematische exemplarische Darstellung des erfindungsgemäßen Beleuchtungssystems.

Gemäß der Erfindung ist es daher vorgesehen, dass nach der ersten Inbetriebnahme des Beleuchtungssystems bzw. nach einem Wechsel des Ladungsspeichers, ein oder mehrere Entlade-/Ladezyklen durchgeführt werden. Dabei muss insbesondere das Ergebnis des Entladezyklus nicht bewertet werden, d.h. es muss insbesondere keine Signalisierung nach außerhalb des Beleuchtungsgeräts (beispielsweise über einen Bus oder über eine optische/akustische Ausgabe) erfolgen. Mit anderen Worten wird also der Ladungsspeicher zunächst entladen. Anschließend wird der Ladungsspeicher dann wieder geladen.

Der Inbetriebnahmetest wird erst ausgeführt, wenn wenigstens ein kapazitätserhöhender Entlade-/Ladezyklus durchgeführt und abgeschlossen wurde. Selbstverständlich wird bei dem Inbetriebnahmetest das Ergebnis, d.h. die Bewertung des Entladezyklus an dem Beleuchtungssystem selbst oder durch entsprechende Signalisierung, z.B. über einen Bus, angezeigt.

Bei dem wenigstens einen kapazitätssteigernden Entlade-/Ladezyklus, d.h. einer Folge von einem Entlade- und einem Ladevorgang, erfolgt eine Entladung üblicherweise bis in den Bereich des Tiefenentladeschutzes. Vorzugsweise wird indessen ein Wiederaufladeschwellenwert, d.h. ein Schwellenwert, bei dem die Entladung von der Steuerschaltung gestoppt und ein Laden begonnen wird, so angesetzt, dass dieser über dem/außerhalb des Bereich des Tiefenentladeschutzes liegt, um mit der verbleibenden Restenergie intelligente Schaltung in dem Beleuchtungssystem mit Energie versorgen zu können.

Es kann vorgesehen sein, dass der wenigstens eine kapazitätssteigernde Entlade-/Ladezyklus erst nach einer bestimmten Zeitdauer nach einem Anschluss des Beleuchtungssystems an eine elektrische Versorgung erfolgt. Während der Installation des Beleuchtungssystems kann es gelegentlich zu Unterbrechungen der elektrischen Versorgung des Beleuchtungssystems kommen, die jedoch keinen Notlichtbetriebsfall indizieren. Vielmehr kann sich die Ursache für diese Unterbrechung der elektrischen Versorgung beispielsweise durch eine sich zeitlich überschneidende Installation der elektrischen Versorgung und des/der Beleuchtungssystems/Beleuchtungssysteme ergeben.

Entsprechend kann also vorgesehen sein, dass beispielsweise mit der kapazitätserhöhenden Entladung und Ladung erst begonnen wird, wenn für eine bestimmte Zeitdauer keine Unterbrechungen der elektrischen Versorgung durch die Steuerschaltung erkannt wurden.

Diese Zeitdauer kann entweder fest in dem Beleuchtungssystem voreingestellt sein, oder an dem Beleuchtungsgerät einstellbar sein, beispielsweise durch einen Regler oder ein empfangenes Signal (Bussignal, IR-Signal, Funk-Signal, ...). So kann vorzugsweise ein Zeitraum von 1 bis 10 Tagen, insbesondere von 5 Tagen definiert werden, in dem eine unterbrechungsfreie elektrische Versorgung des Beleuchtungssystems erfolgen muss, bis die Steuerschaltung mit dem kapazitätserhöhenden Entladen/Laden beginnt.

Erfolgt jedoch in diesem Zeitraum eine Unterbrechung der elektrischen Versorgung, so kann vorgesehen sein, dass die vorbestimmte Zeitdauer erneut zu laufen beginnt.

Diese Zeitdauer kann auch mit einer Zusatzzeitdauer beaufschlagt werden, die durch eine beispielsweise in dem Notlicht-Betriebsgerät durch die Steuerschaltung generierte (Pseudo-)Zufallszahl vorgegeben wird. So wäre es möglich, dass jedes Notlicht-Betriebsgerät sich selbständig, beispielsweise bei der Inbetriebnahme, eine Zufallszahl in einem vorgegebenen Wertebereich generiert. Auf diese Weise wird ermöglicht, dass aufgrund der unterschiedlichen Zufallszahlen jedes Notlicht-Betriebsgerät eine andere Zusatzzeitdauer aufweist, und somit die kapazitätserhöhende Entladung und Ladung für die einzelnen Notlicht-Betriebsgeräte zeitlich versetzt erfolgt.

Dies bietet den Vorteil, dass bei einem möglicherweise auftretenden Notlichtfall nicht alle Ladungsspeicher der Notlicht-Betriebsgeräte gleichzeitig aufgrund der Lade- und Entladezyklen entladen sind und somit nicht unverzüglich für eine Notbeleuchtung bereit stehen.

Die Steuerschaltung kann ein bestimmtes Ereignis erfassen und abhängig davon wenigstens einmal die elektrischen Energiespeichermittel entladen und/oder laden. Das bestimmte Ereignis kann beispielsweise wie oben erläutert eine Zeitdauer sein, während der das Notlicht-Betriebsgerät ausgehend von einer Netzspannung versorgt ist. Diese Zeitdauer kann auch mit einer Zusatzzeitdauer beaufschlagt werden.

Zusätzlich oder alternativ kann das bestimmte Ereignis auch aufgrund einer Überwachung des Nutzungsverlaufes der Beleuchtung festgelegt werden. So kann beispielsweise bei einem Beleuchtungssystem erfasst werden, zu welchen Zeiträumen das Beleuchtungssystem nicht genutzt wird.

Parameter des Nutzungsverlaufs können in dem Betriebsgerät oder in einer über einen Bus verbundenen Zentrale analysiert und abgespeichert werden.

Beispielsweise kann dies bei einem Bürogebäude ein Zeitraum in den Nachtstunden sein, wenn sich keine Menschen in dem Bürogebäude aufhalten. Eine derartige Erfassung kann beispielsweise adaptiv durch die Auswertung des Schaltverhaltens und des Nutzungsverhaltens erfolgen oder auch durch eine externe Vorgabe beispielsweise durch Programmierung. In dem Beispiel des Bürogebäudes kann beispielsweise der Zeitraum der Nachtstunden genutzt werden, um die die kapazitätserhöhende Entladung und Ladung für die einzelnen Notlicht-Betriebsgeräte, ohne das eine Gefährdung anwesender Menschen aufgrund der möglicherweise fehlender Notlichtbeleuchtung zu befürchten wäre.

Die Steuerschaltung erlaubt es dabei, automatisiert den Entlade/Ladevorgang des Ladungsspeichers zu überwachen und zu steuern. Bei dem verwendeten Ladungsspeicher kann es sich dabei insbesondere um wiederaufladbare Batterien/Akkumulatoren handeln, die nach ihrer Art Nickel-Cadmium (NiCd)- und/oder Nickel-Metallhydrid (NiMh)-Ladungsspeicher sein können.

Insofern kann also durch die Steuerschaltung des Beleuchtungssystems ein entsprechender Entlade/Ladezyklus vor dem Inbetriebnahmetest des Beleuchtungssystems ausgeführt werden.

Weiter kann vorgesehen sein, dass das Beleuchtungssystem nach außen hin optisch und/oder akustisch signalisiert, dass sich das Beleuchtungssystem in einem Betriebsmodus befindet, indem die Entladung/Ladung des Ladungsspeichers vor dem Inbetriebnahmetest erfolgt, dass der Inbetriebnahmetest (noch nicht) durchgeführt wurde und/oder das eine Durchführung des kapazitätserhöhenden Entladens/Ladens (noch nicht) erfolgt ist.

Nachdem der Entlade-/Ladezyklus wenigstens einmal durchlaufen wurde, erfolgt seitens der Steuerschaltung des Beleuchtungssystems entweder automatisiert, beispielsweise nach einer bestimmten weiteren Zeitdauer, oder auf ein externes Signal hin, beispielsweise auch durch einen Benutzer, die Durchführung des Inbetriebnahmetests, z.B. im Rahmen der Kommissionierung des Beleuchtungssystems. Bei dem Beleuchtungssystem handelt es sich dabei insbesondere um ein Beleuchtungssystem mit einer digitalen Busschnittstelle (DALI, DSI, ...), über die das Beleuchtungssystem externe Befehle erhalten und ggf. austauschen kann.

Es kann vorgesehen sein, dass der kapazitätssteigernde Entlade-/Ladezyklus des Energiespeichermittels auch wiederholt zu späteren Zeitpunkten erfolgen kann. Dadurch kann beispielsweise nach einer bestimmten Betriebsdauer oder Zeit nach der Installation der kapazitätssteigernde Entlade-/Ladezyklus wiederholt werden, um die Kapazität und Lebensdauer des Energiespeichermittels zu erhöhen bzw. dessen Alterung zu verzögern. Dazu kann vorgesehen sein, dass der Entlade-/Ladezyklus beispielsweise entweder zentral über einen Steuerbefehl des Beleuchtungssystems mit einer digitalen Busschnittstelle (z.B. DALI Befehl) oder lokal über den optionalen Prüftaster aktiviert werden. Die Steuerschaltung kann dazu ausgelegt sein, den kapazitätssteigernden Entlade-/Ladezyklus des Energiespeichermittels auch wiederholt zu späteren Zeitpunkten einzuleiten. Bei Initiierung des Entlade-/Ladezyklus über einen Steuerbefehl über die digitalen Busschnittstelle des Beleuchtungssystems (z.B. über eine Dali Bedienungseinheit) kann beispielsweise sichergestellt werden, dass sich nicht mehrere Geräte in einem Raum gleichzeitig in dem Entlade-/Ladezyklus, sondern die Geräte sequentiell nacheinander den Entlade-/Ladezyklus durchlaufen. Beispielsweise kann auch bei einem Beleuchtungssystem mit einer digitalen Busschnittstelle ein Plan zur regelmäßigen und wiederholten Durchführung des kapazitätssteigernden Entlade-/Ladezyklus abgelegt sein, beispielsweise in einem zentralen Steuergerät, und entsprechend diesem Plan von dem Beleuchtungssystem über die digitale Busschnittstelle, insbesondere durch das zentrale Steuergerät, initiiert werden.

Fig. 1 zeigt eine exemplarische und schematische Darstellung eines Beleuchtungssystems, insbesondere eines Notlicht-Betriebsgeräts, mit einer Steuerschaltung 1, einem Leuchtmittel 2 (hier LED) sowie elektrischen Energiespeichermittel 3. Bei dem Leuchtmittel kann es sich wie bereits gesagt um eine Gasentladungslampe oder, wie dargestellt, um eine LED handeln, wobei selbstverständlich auch eine LED-Strecke mit einer oder mehreren LEDs betrieben werden kann. Zudem kann auch ein separates Notlicht-Leuchtmittel vorgesehen sein (nicht gezeigt), dass dann im Notlichtbetrieb alternativ oder zusätzlich betrieben wird. Ist ein Notlicht-Leuchtmittel nicht vorhanden, wird das Leuchtmittel 2 als Notlichtleuchtmittel verwendet und dann auch im Notlichtfall betrieben, z.B. mit reduzierter Helligkeit.

Ebenfalls ist ein optionales Signalisierungsmittel 4 vorgesehen, das Zustände des Beleuchtungssystems nach außen hin signalisieren kann. Die Steuerschaltung 1 kann dabei insbesondere das Laden und Entladen der elektrischen Energiespeichermittel 3 überwachen und steuern und ebenfalls die Zufuhr bzw. Unterbrechung der elektrischen Versorgung bzw. Versorgungsspannung 5 erkennen. Zudem ist eine optionale Busschnittstelle 6 mit entsprechenden Busleitungen dargestellt.

## Patentansprüche

1. Notlicht-Betriebsgerät zur Versorgung von Leuchtmitteln (2), insbesondere Notlicht-Leuchtmitteln,
- aufweisend einen Anschluss für eine Versorgungsspannung,
- eine Steuerschaltung (1), und
- elektrische Energiespeichermittel (3), die gesteuert durch die Steuerschaltung ausgehend von der Versorgungsspannung ladbar bzw. über die Leuchtmittel (2) entladbar sind,
**dadurch gekennzeichnet, dass**
die Steuerschaltung (1) dazu ausgebildet ist, selbsttätig nach der erstmaligen Inbetriebnahme der Energiespeichermittel (3) wenigstens einen Entlade-/Ladezyklus der Energiespeichermittel (3) durchzuführen, bevor die Steuerschaltung (1) einen Inbetriebnahmetest ansteuert, bei dem die Steuerschaltung (1) durch Betrieb der Leuchtmittel (2) erfasst, ob die Leuchtmittel (2) über einen vorgeschriebenen Zeitraum betreibbar sind.

2. Notlicht-Betriebsgerät nach Anspruch 1, wobei die Steuerschaltung (1) dazu eingerichtet ist, die Versorgungsspannung des Notlicht-Betriebsgeräts zu überwachen und wobei die Steuerschaltung (1) weiter dazu eingerichtet ist, ein Laden und Entladen der elektrischen Energiespeichermittel (3) zu steuern sowie ihren Ladezustand zu überwachen.

3. Notlicht-Betriebsgerät nach Anspruch 1 oder 2, wobei die elektrischen Energiespeichermittel (3) dazu eingerichtet sind, das Leuchtmittel (2), vorzugsweise wenigstens eine LED, in einem Notlichtbetriebsmodus elektrisch zu versorgen.

4. Notlicht-Betriebsgerät nach einem der vorgehenden Ansprüche, wobei die Steuerschaltung (1) dazu eingerichtet ist, ein bestimmtes Ereignis zu erfassen und abhängig davon wenigstens einmal die elektrischen Energiespeichermittel (3) zu entladen und/oder zu laden.

5. Notlicht-Betriebsgerät nach Anspruch 4, wobei das bestimmte Ereignis eine Zeitdauer ist, während der das Notlicht-Betriebsgerät ausgehend von einer Netzspannung versorgt ist.

6. Notlicht-Betriebsgerät nach einem der Ansprüche 4 oder 5, wobei das bestimmte Ereignis ein Wechsel der elektrischen Energiespeichermittel (3) ist.

7. Notlicht-Betriebsgerät nach einem der vorgehenden Ansprüche, wobei die Steuerschaltung (1) dazu eingerichtet ist, die elektrischen Energiespeichermittel (3) wenigstens einmal auf einen vorbestimmten Schwellenwert, insbesondere vollständig, zu entladen und wenigstens einmal bis zu einem weiteren Schwellenwert, insbesondere vollständig, zu laden.

8. Notlicht-Betriebsgerät nach einem der vorgehenden Ansprüche, wobei das Entladen bis zu einem Tiefenentladeschutzbereich erfolgt, vorzugsweise bis zu einem Schwellenwert außerhalb, vorzugsweise oberhalb des Tiefenentladeschutzbereiches.

9. Notlicht-Betriebsgerät nach einem der Ansprüche 4 bis 8, wobei die Steuerschaltung (1) dazu eingerichtet ist, das bestimmte Ereignis nach einer Unterbrechung der elektrischen Versorgung erneut zu erkennen.

10. Notlicht-Betriebsgerät nach einem der Ansprüche 4 bis 9, wobei die Steuerschaltung (1) dazu eingerichtet ist, erst nach dem bestimmten Ereignis eine Notlichtbetriebserkennung durchzuführen.

11. Notlicht-Betriebsgerät nach einem der vorgehenden Ansprüche, wobei die Steuerschaltung (1) dazu eingerichtet ist, die elektrischen Energiespeichermittel (3) wenigstens zweimal zu entladen und zu laden.

12. Notlicht-Betriebsgerät nach einem der vorgehenden Ansprüche, wobei die kapazitätssteigernde Entlade-/Ladezyklus Energiespeichermittel (3) wiederholt zu späteren Zeitpunkten erfolgt.

13. Notlicht-Betriebsgerät nach einem der Ansprüche 5 bis 12, wobei das bestimmte Ereignis die Summe aus der Zeitdauer, während der das Notlicht-Betriebsgerät ausgehend von einer Netzspannung versorgt ist, und einer durch eine Zufallszahl vorgegebene Zusatzzeitdauer ist.

14. Leuchte mit einem Notlicht-Betriebsgerät nach einem der vorgehenden Ansprüche.

15. Verfahren zur Steuerung eines Notlicht-Betriebsgeräts zur Versorgung von Leuchtmitteln (2), insbesondere Notlicht-Leuchtmitteln, bei dem elektrische Energiespeichermittel (3) gesteuert durch eine Steuerschaltung (1) ausgehend von einer Versorgungsspannung ladbar bzw. über die Leuchtmittel entladbar sind,
**dadurch gekennzeichnet, dass**
die Steuerschaltung (1) selbsttätig nach der erstmaligen Inbetriebnahme der Energiespeichermittel (3) wenigstens einen Entlade-/Ladezyklus der Energiespeichermittel durchführt, bevor die Steuerschaltung einen Inbetriebnahmetest ansteuert, bei dem die Steuerschaltung durch Betrieb der Leuchtmittel (2) erfasst, ob die Leuchtmittel (2) über einen vorgeschriebenen Zeitraum betreibbar sind.

## Claims

1. An emergency light operating device for the supply of light-emitting means (2), in particular, emergency light-light-emitting means,
- having a connection for a supply voltage,
- a control circuit (1), and
- electrical energy storage means (3), which controlled by the control circuit can be charged from the support voltage or can be discharged via the light-emitting means (2),
**characterized in that** the control circuit (1) is designed automatically to carry out at least one discharge-/charge cycle of the energy storage means (3) after the initial commissioning of the energy storage means (3), before the control circuit (1) actuates a commissioning test, in which the control circuit (1) by operating the light-emitting means (2) detects whether the light-emitting means (2) can be operated over a stipulated time period.

2. An emergency light operating device according to Claim 1, wherein the control circuit (1) is arranged to monitor the supply voltage of the emergency light operating device and wherein the control circuit (1) is further arranged to control a charging and discharging of the electrical energy storage means (3) and to monitor its state of charge.

3. An emergency light operating device according to Claim 1 or 2, wherein the electrical energy storage means (3) is arranged to electrically supply the light-emitting means (2), preferably at least one LED, in an emergency light operating mode.

4. An emergency light operating device according to any one of the preceding claims, wherein the control circuit (1) is arranged to detect a specific event and depending thereon to discharge and/or to charge the electrical energy storage means (3) at least once.

5. An emergency light operating device according to Claim 4, wherein the specific event is a time period, during which the emergency light operating device is supplied from a mains voltage.

6. An emergency light operating device according to any one of Claims 4 or 5, wherein the specific event is a change in the electrical energy storage means (3).

7. An emergency light operating device according to any one of the preceding claims, wherein the control circuit (1) is arranged to discharge the electrical energy storage means (3) at least once to a predetermined threshold value, in particular completely, and to charge said electrical energy storage means at least once up to a further threshold value, in particular completely.

8. An emergency light operating device according to any one of the preceding claims, wherein the discharging takes place up to a deep discharge protection region, preferably up to a threshold outside, preferably above the deep discharge protection region.

9. An emergency light operating device according to any one of Claims 4 to 8, wherein the control circuit (1) is arranged to detect the specific event again after an interruption of the electrical supply.

10. An emergency light operating device according to any one of Claims 4 to 9, wherein the control circuit (1) is arranged to carry out an emergency light operating detection only after the specific event.

11. An emergency light operating device according to any one of the preceding claims, wherein the control circuit (1) is arranged to discharge and to charge the electrical energy storage means (3) at least twice.

12. An emergency light operating device according to any one of the preceding claims, wherein the capacity-enhancing discharge-/charge cycle of the energy storage means (3) takes place repeatedly at later points in time.

13. An emergency light operating device according to any one of Claims 5 to 12, wherein the specific event is the sum of the time period, during which the emergency light operation device is supplied from a mains voltage, and of an additional time period predetermined by a random number.

14. A luminaire with an emergency light operating device according to any one of the preceding claims.

15. A method for controlling an emergency light operating device for the supply of light-emitting means (2), in particular, emergency light-light-emitting means, in which electrical energy storage means (3) controlled by a control circuit (1) can be charged from a supply voltage or can be discharged via the light-emitting means,
**characterized in that**
the control circuit (1) automatically carries out at least one discharge-/charge cycle of the energy storage means after the initial commissioning of the energy storage means (3), before the control circuit (1) actuates a commissioning test, in which the control circuit by operating the light-emitting means (2) detects whether the light-emitting means (2) can be operated over a stipulated time period.

## Revendications

1. Appareil de commande d'éclairage de secours pour l'alimentation de moyens d'éclairage (2), plus particulièrement de moyens d'éclairage de secours,
- comprenant un raccordement pour une tension d'alimentation,
- un circuit de commande (1) et
- des moyens d'accumulation d'énergie électrique (3) qui peuvent être chargés de manière contrôlée par l'intermédiaire du circuit de commande à partir de la tension d'alimentation ou déchargés par l'intermédiaire des moyens d'éclairage (2),
**caractérisé en ce que**
le circuit de commande (1) est conçu pour effectuer automatiquement après la première mise en service des moyens d'accumulation d'énergie électrique (3), au moins un cycle de décharge/charge des moyens d'accumulation d'énergie électrique (3) avant que le circuit de commande (1) n'initie un test de mise en service dans lequel le circuit de commande (1) détermine, par le fonctionnement des moyens d'éclairage (2), si les moyens d'éclairage (2) peuvent fonctionner sur une période prédéterminée.

2. Appareil de commande d'éclairage de secours selon la revendication 1, le circuit de commande (1) étant conçu pour surveiller la tension d'alimentation de l'appareil de commande d'éclairage de secours et le circuit de commande (1) étant en outre conçu pour contrôler une charge et une décharge des moyens d'accumulation d'énergie électrique (3) ainsi que pour surveiller leur état de charge.

3. Appareil de commande d'éclairage de secours selon la revendication 1 ou 2, les moyens d'accumulation d'énergie électrique (3) étant conçus pour alimenter électriquement le moyen d'éclairage (2), de préférence au moins une LED, dans un mode de fonctionnement en éclairage de secours.

4. Appareil de commande d'éclairage de secours selon l'une des revendications précédentes, le circuit de commande (1) étant conçu pour détecter un événement déterminé et pour charger et/ou décharger au moins une fois les moyens d'accumulation d'énergie électrique (3) en fonction de cela.

5. Appareil de commande d'éclairage de secours selon la revendication 4, l'événement déterminé étant une durée pendant laquelle l'appareil de commande d'éclairage de secours est alimenté à partir d'une tension de réseau.

6. Appareil de commande d'éclairage de secours selon l'une des revendications 4 ou 5, l'événement déterminé étant un changement de moyen d'accumulation d'énergie électrique (3).

7. Appareil de commande d'éclairage de secours selon l'une des revendications précédentes, le circuit de commande (1) étant conçu pour décharger les moyens d'accumulation d'énergie électrique (3) au moins une fois à une valeur seuil prédéterminée, plus particulièrement complètement et pour les charger au moins une fois jusqu'à une autre valeur seuil, plus particulièrement complètement.

8. Appareil de commande d'éclairage de secours selon l'une des revendications précédentes, la décharge ayant lieu jusqu'à un intervalle de protection contre les décharges profondes, de préférence jusqu'à une valeur seuil hors, de préférence au-dessus, de l'intervalle de protection contre les décharges profondes.

9. Appareil de commande d'éclairage de secours selon l'une des revendications 4 à 8, le circuit de commande (1) étant conçu pour détecter à nouveau l'événement déterminé après une interruption de l'alimentation électrique.

10. Appareil de commande d'éclairage de secours selon l'une des revendications 4 à 9, le circuit de commande (1) étant conçu pour effectuer une détection de fonctionnement en éclairage de secours seulement après l'événement déterminé.

11. Appareil de commande d'éclairage de secours selon l'une des revendications précédentes, le circuit de commande (1) étant conçu pour décharger et charger les moyens d'accumulation d'énergie électrique (3) au moins deux fois.

12. Appareil de commande d'éclairage de secours selon l'une des revendications précédentes, le cycle de décharge/charge augmentant la capacité des moyens d'accumulation d'énergie électrique (3) ayant lieu de manière répétée à des moments ultérieurs.

13. Appareil de commande d'éclairage de secours selon l'une des revendications 5 à 12, l'événement déterminé étant la somme de la durée pendant laquelle l'appareil de commande d'éclairage de secours est alimenté à partir d'une tension de réseau, et d'une durée supplémentaire prédéterminée par un nombre aléatoire.

14. Luminaire avec un appareil de commande d'éclairage de secours selon l'une des revendications précédentes.

15. Procédé de contrôle d'un appareil de commande d'éclairage de secours pour l'alimentation de moyens d'éclairage (2), plus particulièrement de moyens d'éclairage de secours, dans lequel des moyens d'accumulation d'énergie électrique (3) peuvent être chargés de manière contrôlée par l'intermédiaire d'un circuit de commande (1) à partir de la tension d'alimentation ou déchargés par l'intermédiaire des moyens d'éclairage,
**caractérisé en ce que**
le circuit de commande (1) est conçu pour effectuer automatiquement après la première mise en service des moyens d'accumulation d'énergie électrique (3), au moins un cycle de décharge/charge des moyens d'accumulation d'énergie électrique avant que le circuit de commande n'initie un test de mise en service dans lequel le circuit de commande détermine, par le fonctionnement des moyens d'éclairage (2), si les moyens d'éclairage (2) peuvent fonctionner sur une période prédéterminée.
